# EUROPEAN PATENT APPLICATION

(11) **EP 4 443 561 A1**
(43) Date of publication of application: **09.10.2024**
(21) Application number: 22900965.9
(22) Date of filing: 24.10.2022
(51) Int. Cl.: H01M 4/525, H01M 4/36

(54) **POSITIVE ELECTRODE ACTIVE MATERIAL FOR NON-AQUEOUS ELECTROLYTE SECONDARY BATTERY, POSITIVE ELECTRODE FOR NON-AQUEOUS ELECTROLYTE SECONDARY BATTERY, NON-AQUEOUS ELECTROLYTE SECONDARY BATTERY, AND METHOD FOR MANUFACTURING POSITIVE ELECTRODE ACTIVE MATERIAL FOR NON-AQUEOUS ELECTROLYTE SECONDARY BATTERY**

(30) Priority: 30.11.2021 JP 2021194888
(71) Applicant: Panasonic Intellectual Property Management Co., Ltd., Osaka-shi, Osaka 540-6207 (JP)
(72) Inventor: KAWAKITA, Akihiro, Kadoma-shi, Osaka 571-0057 (JP); DEGUCHI, Masaki, Kadoma-shi, Osaka 571-0057 (JP); INOUE, Katsuya, Kadoma-shi, Osaka 571-0057 (JP); OGASAWARA, Takeshi, Kadoma-shi, Osaka 571-0057 (JP)
(74) Representative: Novagraaf International SA
(86) International application number: PCT/JP2022/039536
(87) International publication number: WO 2023/100532

(57) **Abstract**

Provided is a positive electrode active material having high capacity and reduced reaction resistance of a battery. This positive electrode active material for a non-aqueous electrolyte secondary battery includes a lithium-containing composite oxide that has a layered rock salt structure and a sulfonic acid compound present on the surface of the lithium-containing composite oxide, wherein: the lithium-containing composite oxide contains at least 85 mol% of Ni, at least 4 mol% of Al, and 0-1.5 mol% of Co relative to the total mole number of metal elements excepting Li; and the sulfonic acid compound is represented by general formula I. (In the formula, A is a group 1 element or a group 2 element, R is a hydrocarbon group, and n is 1 or 2.)

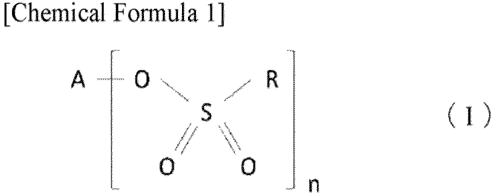

## Description

### TECHNICAL FIELD

The present disclosure relates to a positive electrode active material for non-aqueous electrolyte secondary battery, a positive electrode for non-aqueous electrolyte secondary battery, a non-aqueous electrolyte secondary battery, and a method for manufacturing a positive electrode active material for non-aqueous electrolyte secondary battery.

### BACKGROUND

In recent years, applications of non-aqueous electrolyte secondary batteries have expanded to power sources for electric vehicles and power storage devices for utilizing renewable natural energy. Characteristics required in positive electrode active materials used in non-aqueous electrolyte secondary batteries also vary depending on the applications. For example, Patent Literature 1 discloses a positive electrode active material in which a lithium sulfonate salt compound is attached to the surface of lithium titanate, and describes that this positive electrode active material has an excellent high-temperature storage characteristic.

### CITATION LIST

### PATENT LITERATURE

PATENT LITERATURE 1: Japanese Unexamined Patent Application Publication No. 2018-6164

### SUMMARY

A lithium-containing composite oxide included in a positive electrode active material may be designed such that the content of Ni which provides high capacity is increased, the content of Co which is expensive is reduced, and further such that Al or the like which stabilizes the layered rock salt structure of the lithium-containing composite oxide is included. However, in a secondary battery using such a lithium-containing composite oxide, high reaction resistance may occur. In the technique of Patent Literature 1, no consideration has been made regarding simultaneously achieving both an increase in capacity and suppression of reaction resistance, and there is still room for improvement.

An object of the present disclosure is to provide a positive electrode active material which achieves high capacity and reduced reaction resistance in a battery.

A positive electrode active material for non-aqueous electrolyte secondary battery according to an aspect of the present disclosure includes a lithium-containing composite oxide having a layered rock salt structure and a sulfonic acid compound present at a surface of the lithium-containing composite oxide. The lithium-containing composite oxide contains 85 mol% or more of Ni, 4 mol% or more of Al, and 0 mol% to 1.5 mol% of Co based on the total number of moles of metal elements other than Li. The sulfonic acid compound is represented by general formula I 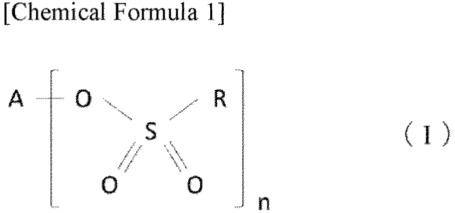 (where A is a Group 1 element or a Group 2 element, R is a hydrocarbon group, and n is 1 or 2).

A method for manufacturing a positive electrode active material for non-aqueous electrolyte secondary battery according to an aspect of the present disclosure includes: a synthesis process in which a metal oxide containing 80 mol% or more of Ni, 4 mol% or more of Al, and 0 mol% to 1.5 mol% of Co is mixed with a Li compound and fired to obtain a lithium-containing composite oxide; a washing process in which the lithium-containing composite oxide is washed with water and dehydrated to obtain a cake-like composition; a drying process in which the cake-like composition is dried to obtain a powdery composition; and an addition process in which at least one of a sulfonic acid compound and a sulfonic acid solution is added to the cake-like composition or the powdery composition.

A positive electrode for non-aqueous electrolyte secondary battery according to an aspect of the present disclosure includes the above-described positive electrode active material.

A non-aqueous electrolyte secondary battery according to an aspect of the present disclosure comprises the above-described positive electrode, a negative electrode, and a non-aqueous electrolyte.

According to a positive electrode active material for non-aqueous electrolyte secondary battery according to an aspect of the present disclosure, it is possible to provide a non-aqueous electrolyte secondary battery having a high capacity and suppressed reaction resistance.

### BRIEF DESCRIPTION OF DRAWINGS

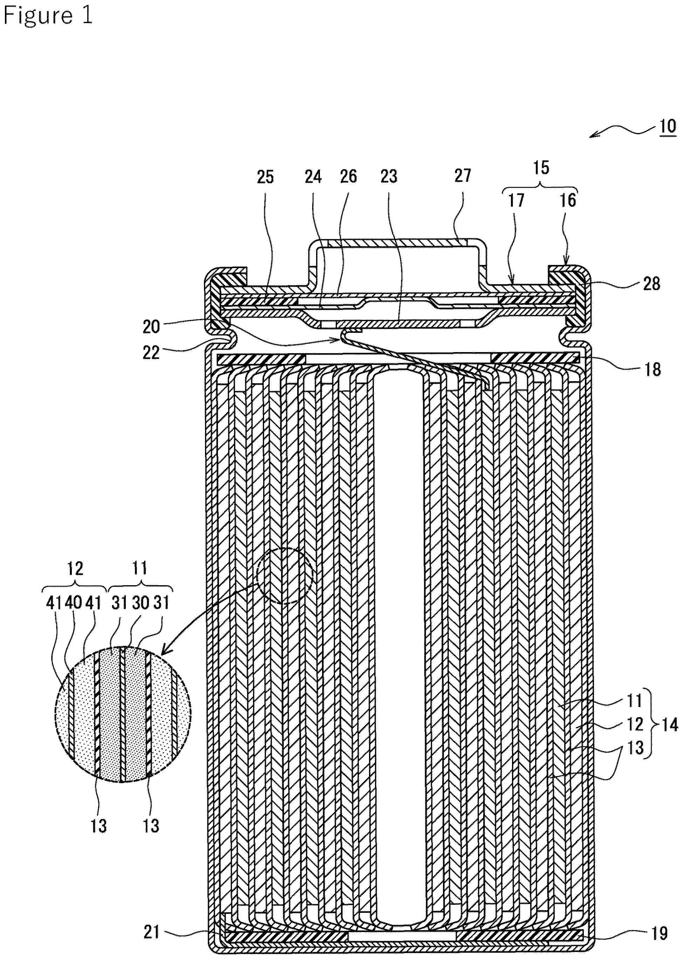

[FIG. 1] FIG. 1 is a longitudinal cross-sectional view of a non-aqueous electrolyte secondary battery according to an example embodiment.

### DESCRIPTION OF EMBODIMENTS

In the layered rock salt structure of the lithium-containing composite oxide, a layer of transition metal such as Ni, a Li layer, and an oxygen layer are present, and battery charge-discharge reaction proceeds as a result of the Li ions present in the Li layer reversibly moving in and out. Here, in the lithium-containing composite oxide, an increase in capacity can be achieved by setting the ratio of Ni to the total number of moles of metal elements other than Li to 85 mol% or more. Further, by configuring the lithium-containing composite oxide to contain Al by 4 mol% or more based on the total number of moles of metal elements other than Li, the layered rock salt structure of the lithium-containing composite oxide can be stabilized. Furthermore, in the lithium-containing composite oxide, cost reduction can be achieved by setting the ratio of Co to the total number of moles of metal elements other than Li to 0 mol% to 1.5 mol%. However, in a secondary battery using such a lithium-containing composite oxide, high reaction resistance may occur.

Accordingly, the present inventors have conducted intensive studies for solving the above problem, and have found as a result that reaction resistance can be suppressed by attaching a sulfonic acid compound represented by general formula I to the surface of the lithium-containing composite oxide. It is presumed that because the sulfonic acid compound present on the surface of the lithium-containing composite oxide has high affinity with the electrolyte, reaction resistance at the surface of the lithium-containing composite oxide is suppressed. 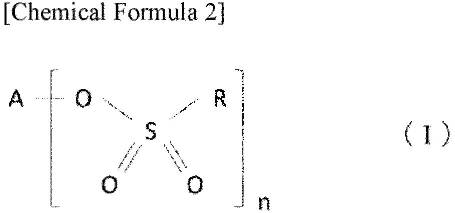 (In the formula, A is a Group 1 element or a Group 2 element, R is a hydrocarbon group, and n is 1 or 2.)

An example embodiment of a non-aqueous electrolyte secondary battery according to the present disclosure will now be described in detail. Although a cylindrical battery in which a spiral-type electrode assembly is housed in a cylindrical outer casing is described below as an example, the electrode assembly is not limited to being of a spiral type, and may be of a laminated type formed by alternately laminating a plurality of positive electrodes and a plurality of negative electrodes one by one via separators. Further, the outer casing is not limited to being cylindrical, and may be, for example, rectangular, coin-shaped, or the like, or may be a battery housing composed of a laminate sheet including a metal layer and a resin layer.

FIG. 1 is a longitudinal cross-sectional view of a non-aqueous electrolyte secondary battery 10 according to an example embodiment. As shown for example in FIG. 1, the non-aqueous electrolyte secondary battery 10 comprises an electrode assembly 14, a non-aqueous electrolyte (not shown in drawing), and a battery housing 15 that houses the electrode assembly 14 and the non-aqueous electrolyte. The electrode assembly 14 has a spiral structure formed by winding a positive electrode 11 and a negative electrode 12 with an interposed separator 13. The battery housing 15 is composed of a bottomed cylindrical outer can 16 and a sealing assembly 17 that closes the opening of the outer can 16.

The electrode assembly 14 comprises a strip-shaped positive electrode 11, a strip-shaped negative electrode 12, two strip-shaped separators 13, a positive electrode tab 20 joined to the positive electrode 11, and a negative electrode tab 21 joined to the negative electrode 12. The negative electrode 12 is formed with a size slightly larger than the positive electrode 11 in order to prevent lithium deposition. That is, the negative electrode 12 is formed longer than the positive electrode 11 in the lengthwise direction and in the width direction (i.e., the cross direction). The two separators 13 are formed with a size slightly larger than at least the positive electrode 11, and are, for example, arranged to sandwich the positive electrode 11.

The non-aqueous electrolyte secondary battery 10 comprises insulation plates 18, 19 respectively arranged above and below the electrode assembly 14. In the example shown in FIG. 1, the positive electrode tab 20 attached to the positive electrode 11 extends through a through hole in the insulation plate 18 and toward the sealing assembly 17, while the negative electrode tab 21 attached to the negative electrode 12 extends outside the insulation plate 19 and toward the bottom portion of the outer can 16. The positive electrode tab 20 is connected to the lower surface of a bottom plate 23 of the sealing assembly 17 by welding or the like, and a cap 27 of the sealing assembly 17 electrically connected to the bottom plate 23 serves as the positive electrode terminal. The negative electrode tab 21 is connected to the inner surface of the bottom portion of the outer can 16 by welding or the like, and the outer can 16 serves as the negative electrode terminal.

The outer can 16 is, for example, a bottomed cylindrical metal container. A gasket 28 is provided between the outer can 16 and the sealing assembly 17, and the internal space of the battery housing 15 is hermetically sealed. The outer can 16 has a grooved portion 22, which is formed, for example, by pressing a side surface portion from the outside, and which supports the sealing assembly 17. The grooved portion 22 is preferably formed in an annular shape along the circumferential direction of the outer can 16, and supports the sealing assembly 17 on its upper surface.

The sealing assembly 17 has a structure obtained by laminating, in order from the electrode assembly 14 side, the bottom plate 23, a lower valve member 24, an insulation member 25, an upper valve member 26, and the cap 27. Each of the members constituting the sealing assembly 17 has, for example, a disk shape or a ring shape, and the respective members except the insulation member 25 are electrically connected to each other. The lower valve member 24 and the upper valve member 26 are connected to each other at their central portions, and the insulation member 25 is interposed between peripheral edge portions of these valve members. When the internal pressure of the battery increases due to abnormal heat generation, the lower valve member 24 deforms and ruptures in a manner pushing up the upper valve member 26 toward the cap 27, and the current path between the lower valve member 24 and the upper valve member 26 is cut off. When the internal pressure increases further, the upper valve member 26 ruptures, and gas is discharged from an opening in the cap 27.

A detailed description will now be given regarding the positive electrode 11, the negative electrode 12, the separators 13, and the non-aqueous electrolyte, which constitute the non-aqueous electrolyte secondary battery 10, and in particular regarding a positive electrode active material included in a positive electrode mixture layer 31 constituting the positive electrode 11.

### [Positive Electrode]

The positive electrode 11 comprises a positive electrode current collector 30 and a positive electrode mixture layer 31 formed on a surface of the positive electrode current collector 30. The positive electrode mixture layer 31 is preferably formed on both sides of the positive electrode current collector 30. As the positive electrode current collector 30, it is possible to use a foil of a metal such as aluminum or an aluminum alloy which is stable in the potential range of the positive electrode 11, a film having such a metal disposed on its surface layer, or the like. The positive electrode mixture layer 31 may contain a positive electrode active material, a conductive agent, and a binder. The thickness of the positive electrode mixture layer 31 is, for example, 10 µm to 150 µm on one side of the positive electrode current collector 30. The positive electrode 11 may be produced by applying a positive electrode slurry containing the positive electrode active material, the conductive agent, the binder, and the like onto the surfaces of the positive electrode current collector 30, and, after drying the applied coating, rolling the applied coating to form positive electrode mixture layers 31 on both sides of the positive electrode current collector 30.

Examples of the conductive agent contained in the positive electrode mixture layer 31 include carbon-based materials such as carbon black (CB), acetylene black (AB), Ketjen black, carbon nanotubes (CNT), graphene, and graphite. A single type among these may be used alone, or two or more types may be used in combination.

Examples of the binder contained in the positive electrode mixture layer 31 include fluororesins such as polytetrafluoroethylene (PTFE) and polyvinylidene fluoride (PVDF), polyacrylonitrile (PAN), polyimide resins, acrylic resins, and polyolefin resins. A single type among these may be used alone, or two or more types may be used in combination.

The positive electrode active material contained in the positive electrode mixture layer 31 includes a lithium-containing composite oxide and a sulfonic acid compound present on the surface of the lithium-containing composite oxide. For example, the lithium-containing composite oxide includes secondary particles formed by agglomeration of primary particles. Here, the surface of the lithium-containing composite oxide means the surface of the secondary particles of the lithium-containing composite oxide, or the interface where the primary particles are in contact with each other. In other words, the sulfonic acid compound is present at the surface of the secondary particles of the lithium-containing composite oxide, or at the interface where the primary particles are in contact with each other.

The particle size of the primary particles constituting the secondary particles of the lithium-containing composite oxide is, for example, 0.02 µm to 2 µm. The particle size of the primary particles is measured as a diameter of a circle circumscribing a particle image observed by a scanning electron microscope (SEM). The volume-based median diameter (D50) of the secondary particles of the lithium-containing composite oxide is, for example, 2 µm to 30 µm. D50 means a particle size at which, in a volume-based particle size distribution, the cumulative frequency from the smaller particle size side reaches 50 %, and is also called a mid-level diameter. The particle size distribution of the secondary particles of the lithium-containing composite oxide can be measured with a laser diffraction particle size distribution measuring device (e.g., MT3000II manufactured by MicrotracBEL Corp.) using water as a dispersion medium.

The lithium-containing composite oxide has a layered rock salt structure. Examples of the layered rock salt structure of the lithium-containing composite oxide include a layered rock salt structure belonging to the space group R-3m, and a layered rock salt structure belonging to the space group C2/m. In terms of achieving high capacity and stability of crystal structure, the lithium-containing composite oxide preferably has a layered rock salt structure belonging to the space group R-3m. The layered rock salt structure of the lithium-containing composite oxide may include a transition metal layer, a Li layer, and an oxygen layer.

The lithium-containing composite oxide contains 85 mol% or more of Ni, 4 mol% or more of Al, and 0 mol% to 1.5 mol% of Co based on the total number of moles of metal elements other than Li. The content of a metal element contained in the lithium-containing composite oxide is measured, for example, by inductively coupled plasma (ICP) emission spectrometry.

By setting the Ni content in the lithium-containing composite oxide to 85 mol% or more, a battery with a high capacity can be obtained. The Ni content in the lithium-containing composite oxide is preferably 90 mol% or more. With this feature, a battery having a higher capacity can be obtained.

By setting the Al content in the lithium-containing composite oxide to 4 mol% or more, the crystal structure of the lithium-containing composite oxide can be stabilized. The upper limit of the Al content is, for example, 15 mol%.

By setting the Co content in the lithium-containing composite oxide to 0 mol% to 1.5 mol%, the cost of the lithium-containing composite oxide can be suppressed. It is noted that Co is an optional component and is not required to be contained in the lithium-containing composite oxide.

The lithium-containing composite oxide may be a composite oxide represented by general formula LiₐNiₓAl_{y}Co_{z}M1_{w}O₂-_{b} (where 0.8 ≤ a ≤ 1.2, 0.85 ≤ x ≤ 0.95, 0.04 ≤ y ≤ 0.15, 0 ≤ z ≤ 0.015, 0 ≤ w ≤ 0.15, 0 ≤ b < 0.05, x+y+z+w = 1, and M1 is at least one element selected from Mn, Fe, Ti, Si, Nb, Zr, Mo, and Zn). M1 is preferably Mn.

The sulfonic acid compound present at the surface of the lithium-containing composite oxide is represented by general formula I below 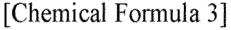 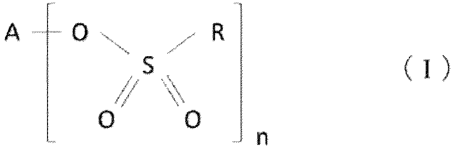 (where A is a Group 1 element or a Group 2 element, R is a hydrocarbon group, and n is 1 or 2).

In general formula I, A is preferably a Group 1 element, and more preferably Li. With this feature, reaction resistance can be further reduced. It is noted that when A is a Group 1 element, n = 1.

In general formula I, R is preferably an alkyl group. R is more preferably an alkyl group having 5 or less carbon atoms, even more preferably an alkyl group having 3 or less carbon atoms, and particularly preferably a methyl group. Further, in R, part of the hydrogen atoms bonded to the carbon atoms may be substituted with fluorine. However, in R, not all of the hydrogen atoms bonded to the carbon atoms are substituted with fluorine. Reaction resistance can be further reduced when the molecular weight of R is smaller.

Examples of the sulfonic acid compound include lithium methanesulfonate, lithium ethanesulfonate, lithium propanesulfonate, sodium methanesulfonate, magnesium methanesulfonate, and lithium fluoromethanesulfonate.

The amount of the sulfonic acid compound present at the surface of the lithium-containing composite oxide is preferably 0.1 % by mass to 1 % by mass, and more preferably 0.3 % by mass to 0.8 % by mass, based on the mass of the lithium-containing composite oxide.

Presence of the sulfonic acid compound at the surface of the lithium-containing composite oxide can be confirmed by Fourier transform infrared spectroscopy (FT-IR). In an infrared absorption spectrum obtained by FT-IR, the positive electrode active material may have an absorption peak at at least one of positions around 1238 cm⁻¹, 1175 cm⁻¹, 1065 cm⁻¹, and 785 cm⁻¹.

In an infrared absorption spectrum obtained by FT-IR, for example, a positive electrode active material containing lithium methanesulfonate has absorption peaks around 1238 cm⁻¹, 1175 cm⁻¹, 1065 cm⁻¹, and 785 cm⁻¹. The peaks around 1238 cm⁻¹, 1175 cm⁻¹, and 1065 cm⁻¹ are absorption peaks caused by SO stretching vibration derived from lithium methanesulfonate. The peak around 785 cm⁻¹ is an absorption peak caused by CS stretching vibration derived from lithium methanesulfonate.

Also in a positive electrode active material containing a sulfonic acid compound other than lithium methanesulfonate, absorption peaks derived from the sulfonic acid compound contained in the positive electrode active material can be identified, as in a positive electrode active material containing lithium methanesulfonate. It is noted that presence of the sulfonic acid compound at the surface of the lithium-containing composite oxide can also be confirmed by ICP, atomic absorption spectrometry, X-ray photoelectron spectroscopy (XPS), synchrotron radiation XRD measurement, TOF-SIMS, and the like.

The average particle size of the sulfonic acid compound is preferably 10 µm or less, more preferably 5 µm or less, and even more preferably 3 µm or less. By setting the average particle size of the sulfonic acid compound to preferably 10 µm or less, more preferably 5 µm or less, and even more preferably 3 µm or less, the sulfonic acid compound can be more uniformly attached to the entire positive electrode active material powder, and the effect of the sulfonic acid compound can be exhibited more notably. The lower limit of the average particle size of the sulfonic acid compound is, for example, 0.1 µm. Here, the average particle size of the sulfonic acid compound can be determined by observing the sulfonic acid compound attached to the surface of the lithium-containing composite oxide using a SEM. More specifically, after identifying the outer shapes of 50 randomly selected particles, the major axis lengths (or the longest axis lengths) of the respective 50 particles are determined, and the average value thereof is used as the average particle size of the sulfonic acid compound.

A metal compound may be present at the surface of the lithium-containing composite oxide. The metal compound contains, for example, one or more metal elements selected from the group consisting of Sr, Ca, W, Zr, rare earth elements, and Al. Examples of a compound containing Sr include SrO, Sr(OH)₂, and SrCO₃. Examples of a compound containing Ca include CaO, Ca(OH)₂, and CaCO₃. Examples of a compound containing W include WO₃. Examples of a compound containing Al include Al₂O₃. Examples of a compound containing Zr include ZrO₂, Zr(OH)₄, Zr(CO₃)₂, and Zr(SO₄)₂•4H₂O. Examples of a compound containing rare earth elements include oxides, hydroxides, carbonates, sulfates, nitrates, and phosphates of rare earth elements. Further, the metal compound may contain a plurality of these metal elements, and examples of such metal compound include SrAlO₄ and CaAlO₄. The metal compound may further contain Li, and examples of such metal compound include lithium tungstate.

A non-metal compound may be present at the surface of the lithium-containing composite oxide. The non-metal compound contains, for example, one or more non-metal elements selected from the group consisting of P and B. Examples of a compound containing P include Li₃₋ₓHₓPO₄ (where 0 ≤ x ≤ 3). Examples of a compound containing B include H₃BO₃, Li₃BO₃, and Li₂B₄O₇.

Regarding the positive electrode active material, when the filtrate of an aqueous dispersion obtained by dispersing 1 g of the positive electrode active material in 70 ml of pure water is titrated with hydrochloric acid, assuming that the amount of acid consumption up to the first inflection point in the pH curve is X mol/g and the amount of acid consumption up to the second inflection point is Y mol/g, the value of Y-X is preferably 130 µmol/g or less, more preferably 100 µmol/g or less, and even more preferably 60 µmol/g or less. Further, the value of X-(Y-X) is preferably 130 µmol/g or less, more preferably 100 µmol/g or less, and even more preferably 60 µmol/g or less. In other words, the positive electrode active material may contain a small amount of water-soluble alkaline component that is titrated with an acid. When the amount of the alkaline component contained in the positive electrode active material is small, stability of the slurry is improved and productivity is enhanced.

The positive electrode active material contains the alkaline component in an amount corresponding to the above-described amount of acid consumption. Examples of the alkaline component include lithium hydroxide (LiOH) and lithium carbonate (Li₂CO₃). Lithium carbonate and lithium hydroxide may be present on the interior of the particles of the composite oxide at the interface of primary particles, and at the surface of secondary particles formed by agglomeration of the primary particles. These substances are preferably present evenly and uniformly, without being unevenly densely distributed at a part of the surface of the primary particles.

A specific method for quantifying the water-soluble alkaline component extracted from the positive electrode active material is as described below. The following titration method is generally referred to as Warder's method.
(1) 1 g of the positive electrode active material is added to 30 ml of pure water and stirred to thereby prepare a suspension in which the active material is dispersed in water.
(2) The suspension is filtered, pure water is added thereto to adjust the volume to 70 ml, and a filtrate containing the water-soluble alkaline component eluted from the active material is thereby obtained.
(3) While measuring the pH of the filtrate, hydrochloric acid is added dropwise in small amounts to the filtrate, and determinations are made as to the amount of X mol/g (i.e., the amount used for titration) of hydrochloric acid consumed up to the first inflection point (at around pH 8) in the pH curve, and the amount of Y mol/g of hydrochloric acid consumed up to the second inflection point (at around pH 4). It is noted that an inflection point is a peak position of the derivative with respect to the amount used for titration.

The positive electrode mixture layer 31 may contain other positive electrode active materials in addition to the above-described positive electrode active material of the present embodiment. Other positive electrode active materials include, for example, lithium-containing composite oxides having a Ni content of 0 mol% or more and less than 85 mol%.

Next, an example method for manufacturing the positive electrode active material according to the present embodiment will be described. The method for manufacturing the positive electrode active material includes, for example, a synthesis process, a washing process, a drying process, and an addition process.

In the synthesis process, a metal oxide containing 80 mol% or more of Ni, 4 mol% or more of Al, and 0 mol% to 1.5 mol% of Co is mixed with a Li compound, and the mixture is fired to obtain a lithium-containing composite oxide.

The metal oxide can be obtained, for example, by adding dropwise an alkaline solution of sodium hydroxide or the like to a solution of a metal salt containing Ni, Al, and any optional metal element (such as Co, Mn, and Fe) while stirring to adjust the pH toward the alkaline side (for example, 8.5 to 12.5), thereby causing a composite hydroxide containing Ni, Al, and the optional metal element to be precipitated (or co-precipitated), and heat-treating this composite hydroxide. No particular limitation is imposed on the heat treatment temperature, but is, for example, in the range of 300 °C to 600 °C.

Examples of the Li compound include Li₂CO₃, LiOH, Li₂O₂, Li₂O, LiNO₃, LiNO₂, Li₂SO₄, LiOH•H₂O, LiH, and LiF. In terms of facilitating adjustment of the above-noted parameters within the above-defined ranges, the mixing ratio of the metal oxide and the Li compound is preferably set, for example, to a ratio such that the molar ratio of metal elements other than Li to Li becomes in the range of 1:0.98 to 1:1.1. It is noted that when mixing the metal oxide and the Li compound, other metal raw materials may be added as necessary. Here, other metal raw materials are materials such as oxides containing metal elements other than the metal elements constituting the metal oxide.

The mixture of the metal oxide and the Li compound is fired, for example, in an oxygen atmosphere. The firing conditions may be such that the heating rate at 450 °C or higher and 680 °C or lower is in the range of more than 1.0 °C/min and 5.5 °C/min or less, and the maximum temperature reached is in the range of 700 °C or higher and 850 °C or lower. The heating rate from over 680 °C to the maximum temperature reached may be, for example, 0.1 °C/min to 3.5 °C/min. Further, the maximum temperature reached may be maintained for 1 hour or more and 10 hours or less. Furthermore, this firing process may be a multi-stage firing process, and the first heating rate and the second heating rate may respectively be provided in a plural number for separate temperature ranges, so long as the heating rates are within the above-defined ranges.

In the washing process, the lithium-containing composite oxide obtained in the synthesis process is washed with water and dehydrated to obtain a cake-like composition. The washing with water and dehydration can be performed using known methods and conditions, and may be carried out within the extent that lithium is not eluted from the lithium-containing composite oxide and the battery characteristics are not deteriorated. It is noted that since the positive electrode active material according to the present embodiment is washed with water, there remains only a small amount of alkaline component.

In the drying process, the cake-like composition obtained in the washing step is dried to obtain a powdery composition. The drying process may be performed in a vacuum atmosphere. The drying conditions are, for example, 150 °C to 400 °C for 0.5 hours to 15 hours.

In the addition process, at least one of a sulfonic acid compound and a sulfonic acid solution is added to the cake-like composition obtained in the washing process or the powdery composition obtained in the drying process. As a result, a sulfonic acid compound can be attached to the surface of the lithium-containing composite oxide. The at least one of a sulfonic acid compound and a sulfonic acid solution is preferably added to the cake-like composition. The sulfonic acid compound may be in the form of a powder or a solution. The sulfonic acid solution is, for example, a methanesulfonic acid solution obtained by dissolving methanesulfonic acid in water. Since the Li compound remains present in the cake-like composition and this residual Li compound is dissolved in the water contained in the cake-like composition, when the sulfonic acid solution is added, a sulfonic acid compound containing Li is formed. Further, a Li compound may be added to the cake-like composition together with the sulfonic acid solution. The Li compound is, for example, LiOH. The amounts of the Li compound and the sulfonic acid solution added to the cake-like composition preferably satisfy the following relationship in molar ratio: 0 ≤ Li compound / sulfonic acid ≤ 1.3. The amount of the sulfonic acid compound or sulfonic acid added is preferably 0.1 % by mass to 1 % by mass, and more preferably 0.3 % by mass to 0.8 % by mass, based on the mass of the lithium-containing composite oxide. The concentration of each of the sulfonic acid solution and the sulfonic acid compound solution is, for example, 0.5 % by mass to 40 % by mass.

A metal compound containing one or more metal elements selected from the group consisting of Sr, Ca, W, Zr, rare earth elements, and Al, as well as a non-metal compound containing one or more non-metal elements selected from the group consisting of P and B, can be attached to the surface of the lithium-containing composite oxide by adding raw materials of the metal compound and the non-metal compound at a time such as during the synthesis process, after the synthesis process, during the washing process, after the washing process, during the drying process, after the drying process, or during the addition process. Examples of a Sr raw material include Sr(OH)₂, Sr(OH)₂•8H₂O, SrO, SrCO₃, SrSO₄, Sr(NO₃)₂, SrCl₂, and SrAlO₄. Examples of a Ca raw material include Ca(OH)₂, CaO, CaCO₃, CaSO₄, Ca(NO₃)₂, CaCl₂, and CaAlO₄. Examples of a Zr raw material include Zr(OH)₄, ZrO₂, Zr(CO₃)₂, and Zr(SO₄)₂•4H₂O. Examples of a rare earth raw material include oxides, hydroxides, and carbonates of rare earth elements. Examples of a W raw material include tungsten oxide (WO₃) and lithium tungstate (Li₂WO₄, Li₄WO₅, Li₆W₂O₉). It is noted that a solution containing W may be used as a W raw material. Further, as an Al raw material, while Al₂O₃, Al(OH)₃, Al₂(SO₄)₃, and the like may be used, Al derived from the lithium-containing composite oxide may also be used. Examples of a P raw material include Li₃₋ₓHₓPO₄ (where 0 ≤ x ≤ 3). Examples of a B raw material include H₃BO₃, Li₃BO₃, and Li₂B₄O₇.

### [Negative Electrode]

The negative electrode 12 comprises a negative electrode current collector 40 and a negative electrode mixture layer 41 formed on a surface of the negative electrode current collector 40. The negative electrode mixture layer 41 is preferably formed on both sides of the negative electrode current collector 40. As the negative electrode current collector 40, it is possible to use a foil of a metal such as copper or a copper alloy which is stable in the potential range of the negative electrode 12, a film having such a metal disposed on its surface layer, or the like. The negative electrode mixture layer 41 may contain a negative electrode active material and a binder. The thickness of the negative electrode mixture layer 41 is, for example, 10 µm to 150 µm on one side of the negative electrode current collector 40. The negative electrode 12 may be produced by applying a negative electrode slurry containing the negative electrode active material, the binder, and the like onto the surfaces of the negative electrode current collector 40, and, after drying the applied coating, rolling the applied coating to form negative electrode mixture layers 41 on both sides of the negative electrode current collector 40.

No particular limitation is imposed on the negative electrode active material contained in the negative electrode mixture layer 41 so long as it can reversibly occlude and release lithium ions, and a carbon material such as graphite is generally used therefor. The graphite may be either natural graphite such as flake graphite, massive graphite, and earthy graphite, or artificial graphite such as massive artificial graphite and graphitized mesophase carbon microbeads. Further, as the negative electrode active material, a metal that forms an alloy with Li such as Si and Sn, a metal compound containing Si, Sn, or the like, a lithium-titanium composite oxide, and the like may be used, and these materials having a carbon coating provided thereon may also be used. For example, in combination with graphite, a Si-containing compound represented by SiOₓ (where 0.5 ≤ x ≤ 1.6), a Si-containing compound in which fine particles of Si are dispersed in a lithium silicate phase represented by Li_{2y}SiO_{(2+y)} (where 0 < y < 2), or the like may be used.

Examples of the binder contained in the negative electrode mixture layer 41 include styrene-butadiene rubber (SBR), nitrile-butadiene rubber (NBR), carboxymethyl cellulose (CMC) or a salt thereof, polyacrylic acid (PAA) or a salt thereof (which may be PAA-Na, PAA-K, or the like, or a partially neutralized salt), and polyvinyl alcohol (PVA). A single type among these may be used alone, or two or more types may be used in combination.

### [Separator]

As the separator 13, for example, a porous sheet having ion permeability and insulation property is used. Specific examples of the porous sheet include a microporous thin film, woven fabric, and non-woven fabric. As the material of the separator, polyolefins such as polyethylene and polypropylene, cellulose, and the like are suitable. The separator 13 may have a single-layer structure or a laminated structure. Further, on the surface of the separator 13, there may be provided a highly heat-resistant resin layer made of aramid resin or the like, or a filler layer containing an inorganic compound filler.

### [Non-Aqueous Electrolyte]

The non-aqueous electrolyte contains, for example, a non-aqueous solvent and an electrolyte salt dissolved in the non-aqueous solvent. As the non-aqueous solvent, it is possible to use, for example, esters, ethers, nitriles such as acetonitrile, amides such as dimethylformamide, a mixed solvent containing two or more of the foregoing, and the like. The non-aqueous solvent may contain a halogen-substituted product obtained by substituting at least part of hydrogen atoms in the above solvents with halogen atoms such as fluorine. Examples of the halogen-substituted product include fluorinated cyclic carbonate esters such as fluoroethylene carbonate (FEC), fluorinated chain carbonate esters, fluorinated chain carboxylate esters such as methyl fluoropropionate (FMP), and the like.

Examples of the above-noted esters include: cyclic carbonate esters such as ethylene carbonate (EC), propylene carbonate (PC), and butylene carbonate; chain carbonate esters such as dimethyl carbonate (DMC), ethyl methyl carbonate (EMC), diethyl carbonate (DEC), methyl propyl carbonate, ethyl propyl carbonate, and methyl isopropyl carbonate; cyclic carboxylate esters such as γ-butyrolactone (GBL) and γ-valerolactone (GVL); and chain carboxylate esters such as methyl acetate, ethyl acetate, propyl acetate, methyl propionate (MP), and ethyl propionate (EP).

Examples of the above-noted ethers include: cyclic ethers such as 1,3-dioxolane, 4-methyl-1,3-dioxolane, tetrahydrofuran, 2-methyltetrahydrofran, propylene oxide, 1,2-butylene oxide, 1,3-dioxane, 1,4-dioxane, 1,3,5-trioxane, furan, 2-methylfuran, 1,8-cineole, and crown ethers; and chain ethers such as 1,2-dimethoxyethane, diethyl ether, dipropyl ether, diisopropyl ether, dibutyl ether, dihexyl ether, ethyl vinyl ether, butyl vinyl ether, methyl phenyl ether, ethyl phenyl ether, butyl phenyl ether, pentyl phenyl ether, methoxy toluene, benzyl ethyl ether, diphenyl ether, dibenzyl ether, o-dimethoxybenzene, 1,2-diethoxyethane, 1,2-dibutoxyethane, diethylene glycol dimethyl ether, diethylene glycol diethyl ether, diethylene glycol dibutyl ether, 1,1-dimethoxymethane, 1,1-diethoxyethane, triethylene glycol dimethyl ether, and tetraethylene glycol dimethyl ether.

The electrolyte salt is preferably lithium salt. Examples of the lithium salt include LiBF₄, LiClO₄, LiPF₆, LiAsF₆, LiSbF₆, LiAlCl₄, LiSCN, LiCF₃SO₃, LiCF₃CO₂, Li(P(C₂O₄)F₄), LiPF₆₋ₓ(CₙF₂ₙ₊₁)ₓ (where 1 < x < 6, and n is 1 or 2), LiB₁₀Cl₁₀, LiCl, LiBr, LiI, chloroborane lithium, lower aliphatic lithium carboxylate, borate salts such as Li₂B₄O₇ and Li(B(C₂O₄)F₂), and imide salts such as LiN(SO₂CF₃)₂ and LiN(C₁F₂ₗ₊₁SO₂)(CₘF₂ₘ₊₁SO₂) (where each of l and m is an integer of 0 or greater). As the lithium salt, a single type among these may be used alone, or a plurality of types may be mixed and used. Among the foregoing, it is preferable to use LiPF₆ from the perspective of ion conductivity, electrochemical stability, and the like. The concentration of the lithium salt is, for example, 0.8 mol to 1.8 mol per 1 liter of the non-aqueous solvent. Further, vinylene carbonate, a propane sultone based additive, and the like may be added.

### EXAMPLES

While the present disclosure will now be further described using Examples and Comparative Examples, the present disclosure is not limited to the Examples below.

### <Example 1>

### [Production of Positive Electrode Active Material]

A composite hydroxide represented by [Ni_{0.90}Al_{0.05}Mn_{0.05}](OH)₂ and obtained by a co-precipitation method was fired at 500 °C for 8 hours, and a metal oxide (Ni_{0.90}Al_{0.05}Mn_{0.05}O₂) was obtained. Next, LiOH and the metal oxide were mixed such that the molar ratio of Li to the total amount of Ni, Al, and Mn was 1.03:1, and a mixture was obtained. This mixture was fired under an oxygen stream having an oxygen concentration of 95 % (with a flow rate of 2 mL/min per 10 cm³ and 5 L/min per 1 kg of the mixture) at a heating rate of 2.0 °C/min from room temperature to 650 °C, and subsequently at a heating rate of 0.5 °C/min from 650 °C to 780 °C, and a lithium-containing composite oxide was obtained (synthesis process). To this lithium-containing composite oxide, water was added to obtain a slurry concentration of 1500 g/L, and the slurry was stirred for 15 minutes and filtered to obtain a cake-like composition (washing process). To this cake-like composition, lithium methanesulfonate in powder form was added (addition process). The amount of lithium methanesulfonate added was 0.1 % by mass based on the total mass of the lithium-containing composite oxide. After the addition process, a drying process was performed at 180 °C for 2 hours in a vacuum atmosphere, and a positive electrode active material of Example 1 was obtained. Presence of lithium methanesulfonate at the surface of the positive electrode active material was confirmed by Fourier transform infrared spectroscopy (FT-IR). Further, the value of Y-X of the positive electrode active material was 26 µmol/g, and the value of X-(Y-X) was 31 µmol/g.

### [Production of Positive Electrode]

The positive electrode active material, acetylene black, and polyvinylidene fluoride were mixed in a mass ratio of 85:10:5, formed into a thin pellet while being kneaded using an agate mortar and pestle, subsequently rolled to a predetermined thickness using a roller, and then punched into a predetermined circular shape to form a positive electrode.

### [Preparation of Non-Aqueous Electrolyte]

Ethylene carbonate (EC), methyl ethyl carbonate (MEC), and dimethyl carbonate (DMC) were mixed in a volume ratio of 3:3:4. Into this mixed solvent, lithium hexafluorophosphate (LiPF₆) was dissolved to a concentration of 1.2 mol/L, and a non-aqueous electrolyte was thereby prepared.

### [Production of Test Cell]

An electrode assembly was produced by laminating the above positive electrode and a negative electrode made of lithium metal to face each other via a separator. Next, this electrode assembly and the above non-aqueous electrolyte were placed in a coin-shaped outer casing made of aluminum, and sealing was carried out by crimping with a press machine to thereby produce a test cell. Test cells for other Examples and Comparative Examples were also produced in the same manner.

### [Evaluation of Reaction Resistance]

In a temperature environment of 25 °C, the above test cell was charged with a constant current of 0.1 C until the cell voltage reached 4.3 V (vs Li), and then charged with a constant voltage of 4.3V (vs Li) until the current value reached 0.01 C. After 1 hour, discharging was performed with a constant current of 0.1 C until the cell voltage reached 2.5 V (vs Li). After that, in a temperature environment of 25 °C, charging was again performed with a constant current of 0.1 C until the cell voltage reached 4.3 V (vs Li), and then with a constant voltage of 4.3V (vs Li) until the current value reached 0.01 C. Subsequently, after 2 hours, in a temperature environment of 10 °C, AC impedance of the test cell was measured using Solartron 1255B (manufactured by Solartron) with an applied voltage of 10 mV and in a measurement frequency range of 0.01 Hz to 200 kHz. A Nyquist diagram was drawn based on the measured data, and reaction resistance was determined from the size of the arc between 10 Hz and 0.1 Hz.

### <Example 2>

A test cell was produced and evaluated in the same manner as in Example 1 except that, in the addition process in the production of the positive electrode active material, the amount of lithium methanesulfonate added was 0.3 % by mass based on the total mass of the lithium-containing composite oxide.

### <Example 3>

A test cell was produced and evaluated in the same manner as in Example 1 except that, in the addition process in the production of the positive electrode active material, the amount of lithium methanesulfonate added was 0.5 % by mass based on the total mass of the lithium-containing composite oxide.

### <Example 4>

A test cell was produced and evaluated in the same manner as in Example 1 except that, in the addition process in the production of the positive electrode active material, the amount of lithium methanesulfonate added was 0.8 % by mass based on the total mass of the lithium-containing composite oxide.

### <Example 5>

A test cell was produced and evaluated in the same manner as in Example 1 except that, in the addition process in the production of the positive electrode active material, the amount of lithium methanesulfonate added was 1 % by mass based on the total mass of the lithium-containing composite oxide.

### <Example 6>

A test cell was produced and evaluated in the same manner as in Example 1 except that, in the addition process in the production of the positive electrode active material, sodium methanesulfonate was added instead of lithium methanesulfonate, and the amount of sodium methanesulfonate added was 0.5 % by mass based on the total mass of the lithium-containing composite oxide.

### <Example 7>

A test cell was produced and evaluated in the same manner as in Example 1 except that, in the addition process in the production of the positive electrode active material, lithium ethanesulfonate was added instead of lithium methanesulfonate, and the amount of lithium ethanesulfonate added was 0.5 % by mass based on the total mass of the lithium-containing composite oxide.

### <Example 8>

A test cell was produced and evaluated in the same manner as in Example 1 except that, in the addition process in the production of the positive electrode active material, a methanesulfonic acid solution was added instead of lithium methanesulfonate in powder form, and the amount of methanesulfonic acid added was 0.48 % by mass based on the total mass of the lithium-containing composite oxide. The concentration of the added methanesulfonic acid solution was 10 % by mass, and the methanesulfonic acid solution was added such that the amount of methanesulfonic acid added became as noted above. Presence of lithium methanesulfonate at the surface of the positive electrode active material was confirmed by Fourier transform infrared spectroscopy (FT-IR).

### <Example 9>

A test cell was produced and evaluated in the same manner as in Example 1 except that, in the synthesis process in the production of the positive electrode active material, the composition of the metal oxide was changed to Ni_{0.86}Co_{0.005}Al_{0.045}Mn_{0.09}O₂, and in the addition process, the amount of lithium methanesulfonate added was 0.5 % by mass based on the total mass of the lithium-containing composite oxide. The value of Y-X of the positive electrode active material was 49 µmol/g, and the value of X-(Y-X) was 54 µmol/g.

### <Comparative Example 1>

A test cell was produced and evaluated in the same manner as in Example 1 except that the addition process was not performed in the production of the positive electrode active material.

### <Comparative Example 2>

A test cell was produced and evaluated in the same manner as in Example 8 except that, in the addition process in the production of the positive electrode active material, a 10-mass% lithium succinate solution was added instead of the methanesulfonic acid solution, and the amount of lithium succinate added was 0.5 % by mass based on the total mass of the lithium-containing composite oxide.

### <Comparative Example 3>

A test cell was produced and evaluated in the same manner as in Example 8 except that, in the addition process in the production of the positive electrode active material, a 10-mass% lithium oxalate solution was added instead of the methanesulfonic acid solution, and the amount of lithium oxalate added was 0.5 % by mass based on the total mass of the lithium-containing composite oxide.

### <Comparative Example 4>

A test cell was produced and evaluated in the same manner as in Example 9 except that the addition process was not performed in the production of the positive electrode active material.

### <Comparative Example 5>

A test cell was produced and evaluated in the same manner as in Example 9 except that, in the addition process in the production of the positive electrode active material, a 10-mass% lithium succinate solution was added instead of lithium methanesulfonate in powder form, and the amount of lithium succinate added was 0.5 % by mass based on the total mass of the lithium-containing composite oxide.

### <Comparative Example 6>

A test cell was produced and evaluated in the same manner as in Example 9 except that, in the addition process in the production of the positive electrode active material, a 10-mass% lithium oxalate solution was added instead of lithium methanesulfonate in powder form, and the amount of lithium oxalate added was 0.5 % by mass based on the total mass of the lithium-containing composite oxide.

Reaction resistance values of the test cells of the Examples and Comparative Examples are shown separately in Tables 1 and 2. Tables 1 and 2 also show the composition of lithium-containing composite oxide, the added sulfonic acid compound, the method of addition, and the amount added. The reaction resistance values of the test cells of Examples 1 to 8 and Comparative Examples 2 to 3 shown in Table 1 are expressed relative to the reaction resistance value of the test cell of Comparative Example 1, which is assumed to be 100. Further, the reaction resistance values of the test cells of Example 9 and Comparative Examples 5 to 6 shown in Table 2 are expressed relative to the reaction resistance value of the test cell of Comparative Example 4, which is assumed to be 100.

**[Table 1]**

| | Positive electrode active material | | | | | | | Evaluation result |
|---|---|---|---|---|---|---|---|---|
| | Composition of lithium-containing composite oxide | | | | Sulfonic acid compound | | | |
| | Ni [mol%] | Co [mol%] | Al [mol%] | Mn [mol%] | Added compound | Method of addition | Amount added [mass%] | Reaction resistance (SOC 100%) |
| Example 1 | 90 | 0 | 5 | 5 | Li methanesulfonate | Added in powder form | 0.1 | 81 |
| Example 2 | 90 | 0 | 5 | 5 | Li methanesulfonate | Added in powder form | 0.3 | 77 |
| Example 3 | 90 | 0 | 5 | 5 | Li methanesulfonate | Added in powder form | 0.5 | 62 |
| Example 4 | 90 | 0 | 5 | 5 | Li methanesulfonate | Added in powder form | 0.8 | 85 |
| Example 5 | 90 | 0 | 5 | 5 | Li methanesulfonate | Added in powder form | 1.0 | 89 |
| Example 6 | 90 | 0 | 5 | 5 | Na methanesulfonate | Added in powder form | 0.5 | 94 |
| Example 7 | 90 | 0 | 5 | 5 | Li ethane sulfonate | Added in powder form | 0.5 | 72 |
| Example 8 | 90 | 0 | 5 | 5 | Methanesulfonic acid | Added in solution form | 0.48 | 67 |
| Comparative Example 1 | 90 | 0 | 5 | 5 | - | - | - | 100 |
| Comparative Example 2 | 90 | 0 | 5 | 5 | Li succinate | Added in solution form | 0.5 | 101 |
| Comparative Example 3 | 90 | 0 | 5 | 5 | Li oxalate | Added in solution form | 0.5 | 105 |

**[Table 2]**

| | Positive electrode active material | | | | | | | Evaluation result |
|---|---|---|---|---|---|---|---|---|
| | Composition of lithium-containing composite oxide | | | | Sulfonic acid compound | | | |
| | Ni [mol%] | Co [mol%] | Al [mol%] | Mn [mol%] | Added compound | Method of addition | Amount added [mass%] | Reaction resistance (SOC 100%) |
| Example 9 | 86 | 0.5 | 4.5 | 9 | Li methanesulfonate | Added in powder form | 0.5 | 69 |
| Comparative Example 4 | 86 | 0.5 | 4.5 | 9 | - | - | - | 100 |
| Comparative Example 5 | 86 | 0.5 | 4.5 | 9 | Li succinate | Added in solution form | 0.5 | 100 |
| Comparative Example 6 | 86 | 0.5 | 4.5 | 9 | Li oxalate | Added in solution form | 0.5 | 103 |

As shown in Tables 1 and 2, the test cells of the Examples had lower reaction resistance values than the test cells of the Comparative Examples. By using a positive electrode active material in which a sulfonic acid compound is provided at the surface of a lithium-containing composite oxide having a predetermined composition, it is possible to provide a non-aqueous electrolyte secondary battery having high capacity and suppressed reaction resistance.

### <Example 10>

A test cell was produced and evaluated in the same manner as in Example 1 except that, in the addition process in the production of the positive electrode active material, a lithium methanesulfonate solution prepared by dissolving lithium methanesulfonate in pure water was added instead of lithium methanesulfonate in powder form, and the amount of lithium methanesulfonate added was 0.5 % by mass based on the total mass of the lithium-containing composite oxide. The concentration of the added lithium methanesulfonate solution was 10 % by mass, and the lithium methanesulfonate solution was added such that the amount of lithium methanesulfonate added became as noted above. Presence of lithium methanesulfonate at the surface of the positive electrode active material was confirmed by Fourier transform infrared spectroscopy (FT-IR).

### <Example 11>

A test cell was produced and evaluated in the same manner as in Example 10 except that, in the addition process in the production of the positive electrode active material, a solution containing methanesulfonic acid and LiOH (hereinafter referred to as a methanesulfonic acid + LiOH solution), which was obtained by dissolving methanesulfonic acid and LiOH in pure water at a molar ratio of 1 :0.5, was added instead of the lithium methanesulfonate solution, and the amount of lithium methanesulfonate added was 0.49 % by mass based on the total mass of the lithium-containing composite oxide. The concentration of the added methanesulfonic acid + LiOH solution was 10 % by mass, and the methanesulfonic acid + LiOH solution was added such that the amount of lithium methanesulfonate added became as noted above.

### <Example 12>

A test cell was produced and evaluated in the same manner as in Example 10 except that, in the addition process in the production of the positive electrode active material, a methanesulfonic acid + LiOH solution in which the molar ratio of methanesulfonic acid and LiOH was adjusted to 1: 1 was added instead of the lithium methanesulfonate solution, and the amount of lithium methanesulfonate added was 0.5 % by mass based on the total mass of the lithium-containing composite oxide. The concentration of the added methanesulfonic acid + LiOH solution was 10 % by mass, and the methanesulfonic acid + LiOH solution was added such that the amount of lithium methanesulfonate added became as noted above.

Table 3 shows reaction resistance values of the test cells of Examples 10 to 12 and Comparative Example 1. The reaction resistance values of the test cells of Examples 10 to 12 shown in Table 3 are expressed relative to the reaction resistance value of the test cell of Comparative Example 1, which is assumed to be 100.

**[Table 3]**

| | Positive electrode active material | | | | | | | Evaluation result |
|---|---|---|---|---|---|---|---|---|
| | Composition of lithium-containing composite oxide | | | | Sulfonic acid compound | | | |
| | Ni [mol%] | Co [mol%] | Al [mol%] | Mn [mol%] | Added compound | Method of addition | Amount added [mass%] | Reaction resistance |
| Example 10 | 90 | 0 | 5 | 5 | Li methanesulfonate | Added in solution form | 0.5 | 62 |
| Example 11 | 90 | 0 | 5 | 5 | Methane sulfonic acid + LiOH (Li / methanesulfonic acid = 0.5 [molar ratio]) | Added in solution form | 0.49 | 64 |
| Example 12 | 90 | 0 | 5 | 5 | Methane sulfonic acid + LiOH (Li / methanesulfonic acid = 1.0 [molar ratio]) | Added in solution form | 0.5 | 62 |
| Comparative Example 1 | 90 | 0 | 5 | 5 | - | - | - | 100 |

In Table 3, the test cells of Examples 10 to 12 had lower reaction resistance values than the test cell of Comparative Example 1. It can be seen that, also by using a method in which sulfonic acid solution and a Li compound are added to the cake-like composition, lithium methanesulfonate can be formed at the surface of the positive electrode active material, and reaction resistance can be suppressed.

### REFERENCE SIGNS LIST

10 non-aqueous electrolyte secondary battery; 11 positive electrode; 12 negative electrode; 13 separator; 14 electrode assembly; 15 battery housing; 16 outer can; 17 sealing assembly; 18, 19 insulation plate; 20 positive electrode tab; 21 negative electrode tab; 22 grooved portion; 23 bottom plate; 24 lower valve member; 25 insulation member; 26 upper valve member; 27 cap; 28 gasket; 30 positive electrode current collector; 31 positive electrode mixture layer; 40 negative electrode current collector; 41 negative electrode mixture layer.

## Claims

1. A positive electrode active material for non-aqueous electrolyte secondary battery, comprising:
a lithium-containing composite oxide having a layered rock salt structure; and
a sulfonic acid compound present at a surface of the lithium-containing composite oxide, wherein
the lithium-containing composite oxide contains 85 mol% or more of Ni, 4 mol% or more of Al, and 0 mol% to 1.5 mol% of Co based on the total number of moles of metal elements other than Li, and
the sulfonic acid compound is represented by general formula I 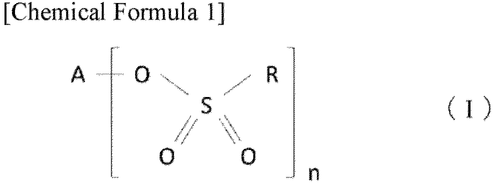 (where A is a Group 1 element or a Group 2 element, R is a hydrocarbon group, and n is 1 or 2).

2. The positive electrode active material for non-aqueous electrolyte secondary battery according to claim 1, wherein the A is a Group 1 element.

3. The positive electrode active material for non-aqueous electrolyte secondary battery according to claim 1, wherein the A is Li.

4. The positive electrode active material for non-aqueous electrolyte secondary battery according to any one of claims 1 to 3, wherein the R is an alkyl group.

5. The positive electrode active material for non-aqueous electrolyte secondary battery according to any one of claims 1 to 3, wherein the R is a methyl group.

6. The positive electrode active material for non-aqueous electrolyte secondary battery according to any one of claims 1 to 5, wherein an amount of the sulfonic acid compound present at the surface of the lithium-containing composite oxide is 0.1 % by mass to 1 % by mass based on a mass of the lithium-containing composite oxide.

7. The positive electrode active material for non-aqueous electrolyte secondary battery according to any one of claims 1 to 6, having an absorption peak at at least one of positions around 1238 cm⁻¹, 1175 cm⁻¹, 1065 cm⁻¹, and 785 cm⁻¹ in an infrared absorption spectrum.

8. The positive electrode active material for non-aqueous electrolyte secondary battery according to any one of claims 1 to 7, wherein an average particle size of the sulfonic acid compound is 10 µm or less.

9. The positive electrode active material for non-aqueous electrolyte secondary battery according to any one of claims 1 to 8, wherein
when a filtrate of an aqueous dispersion obtained by dispersing 1 g of the positive electrode active material for non-aqueous electrolyte secondary battery in 70 ml of pure water is titrated with hydrochloric acid, assuming that an amount of acid consumption up to a first inflection point in the pH curve is X mol/g and an amount of acid consumption up to a second inflection point is Ymol/g, a value of Y-X is 130 µmol/g or less, and a value of X-(Y-X) is 130 µmol/g or less.

10. A method for manufacturing a positive electrode active material for non-aqueous electrolyte secondary battery, comprising:
a synthesis process in which a metal oxide containing 80 mol% or more of Ni, 4 mol% or more of Al, and 0 mol% to 1.5 mol% of Co is mixed with a Li compound and fired to obtain a lithium-containing composite oxide;
a washing process in which the lithium-containing composite oxide is washed with water and dehydrated to obtain a cake-like composition;
a drying process in which the cake-like composition is dried to obtain a powdery composition; and
an addition process in which at least one of a sulfonic acid compound and a sulfonic acid solution is added to the cake-like composition or the powdery composition.

11. A positive electrode for non-aqueous electrolyte secondary battery, comprising the positive electrode active material for non-aqueous electrolyte secondary battery according to any one of claims 1 to 9.

12. A non-aqueous electrolyte secondary battery, comprising the positive electrode for non-aqueous electrolyte secondary battery according to claim 11, a negative electrode, and a non-aqueous electrolyte.
